Europäisches Patentamt

European Patent Office

Office européen des brevets

(11) Publication number: **0 285 347**
**A1**

(12) # EUROPEAN PATENT APPLICATION

(21) Application number: 88302713.8

(22) Date of filing: 25.03.88

(51) Int. Cl.⁴: **B65G 51/03**

(30) Priority: 31.03.87 US 33078

(43) Date of publication of application:
05.10.88 Bulletin 88/40

(84) Designated Contracting States:
AT BE CH DE ES FR GB GR IT LI LU NL SE

(71) Applicant: **The Sardee Corporation**
**11900 South Laramie Avenue**
**Alsip Illinois 60658(US)**

(72) Inventor: **Cole, Rodger E.**
**3973 Douglas Mountain Drive**
**Golden Colorado 80403(US)**

(74) Representative: **Bayliss, Geoffrey Cyril et al**
**BOULT, WADE & TENNANT 27 Furnival Street**
**London EC4A 1PQ(GB)**

(54) **Improvements in or relating to air conveyors.**

(57) The disclosure relates to an air conveyor 8 comprising a plurality of inverted channel-shaped flow plates (14) including coplanar tabs (22) extending from the ends, and a plurality of open-sided louvers (40). The channel-shaped cross section adds rigidity to the flow plates. The coplanar tabs are releasable connected to an air plenum (10) for ease of maintenance.

FIG. 1

# IMPROVEMENTS IN OR RELATING TO AIR CONVEYORS

The invention relates to conveyor systems in general, and in particular to air conveyors in which the motive force is provided by the escape of pressurized air through the orifices of one or more jet plates.

Air conveyor systems are well known in the art and are used to transport various types of materials. In a conventional system, a plenum is connected to a source of compressed gas. One side of the plenum, usually the top, forms the deck of the conveyor over which material is conveyed. The deck includes one or more jet plates containing a plurality of openings that act as nozzles or orifices to provide controlled escape of the pressurized air from the plenum.

The jet plates are typically thin sheets of stainless steel, phenolic, or plastic in which the openings have been stamped, drilled or punched. These openings are designed to direct a stream of air having vertical and horizontal velocity components against the material to be transported. In the simplest form of jet plate, the openings are merely holes angled with respect to the surface of the jet plate. Other types of openings, often called louvers, are similar in form to the cutters on a cheese grate.

One problem associated with air conveyors is that the jet holes or louvers become plugged over a period of time by particulates that accumulate in the plenum and are deposited on the jet plate as the air escapes from the plenum. The openings of conventional conveyors are poorly accessible and difficult to clean. The jet plates are typically fastened directly to the plenum which inhibits their removal. This is particularly true in the case of wide conveyors that require additional center fastening of the jet plate to the plenum to prevent the static pressure inside the plenum from causing the jet plate surface to bow or balloon relative to the points of fixation of the jet plate to the plenum.

Once accessed, conventional jet openings must be cleaned individually, a tiresome and labor intensive job. In the case of angled holes, a cleaning instrument must be inserted into each hole. In the case of conventional louvers, particulates tend to accumulate on the underside of the jet plate and within the louvers themselves. In addition to cleaning the underside of these jet plates, a cleaning instrument must be inserted into each louver.

The air conveyors claimed herein includes an easily removable and replaceable flow (or jet) plate containing openings designed for easy and rapid cleaning. Depending portions of the plate surface eliminate the need for center fastening by stiffening the flow plate to prevent ballooning of the conveyor surface. The louvers are open-sided to facilitate cleaning.

The following is a description of a specific embodiment of the invention, reference being made to the accompanying drawings in which:

FIG. 1 is a perspective view of an air conveyor incorporating a presently preferred embodiment of the invention.

FIG. 2 is an enlarged, exploded view of the circled portion of the air conveyor illustrated in FIG 1.

FIG. 3 is a cross-sectional view of FIG. 1 along the line 3-3.

FIG. 4 is a sectional view of FIG. 3 along the line 4-4.

FIG. 5 is a top view of an open-sided louver utilized by the presently preferred embodiment of the invention.

FIG. 6 is a side view of FIG. 5 along the line 6-6.

FIG. 7 is a side view of FIG. 5 along the line 6-6.

FIG. 8 is a side view of a typical prior art louver.

FIG. 9 is a front view of a typical prior art louver.

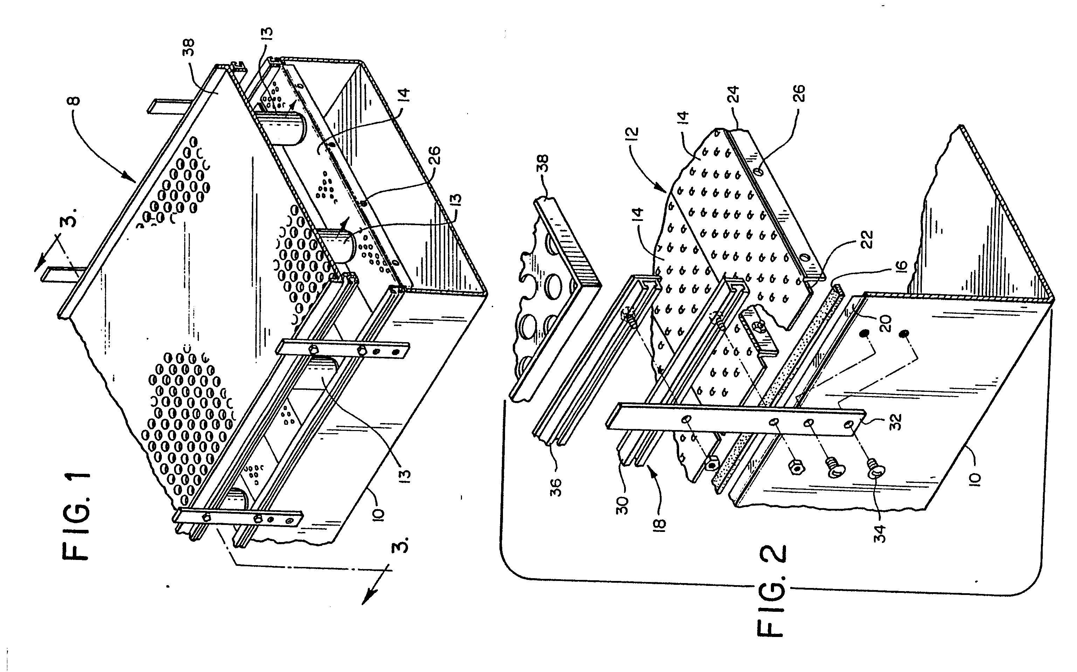

FIG. 1 illustrates an air conveyor 8 used to transport, for example, aluminum cans 13, in the direction shown. As shown in FIGS. 1 through 4, the air conveyor 8 includes a plenum 10 connected to a source of compressed gas (not shown), usually air. The conveyor deck 12 consists of one or more flow plates 14. Seal pad 16 and flow plate compression rail assembly 18 complete the construction.

The plenum is of standard construction and and includes mounting flanges 20 that extend along the top edge. Each flange accommodates a seal pad 16 manufactured from a suitable compressible resilient material. The dimensions of the seal pad are substantially the same as those of the flange. The seal pad may have an adhesive backing that enables it to be secured to the flange.

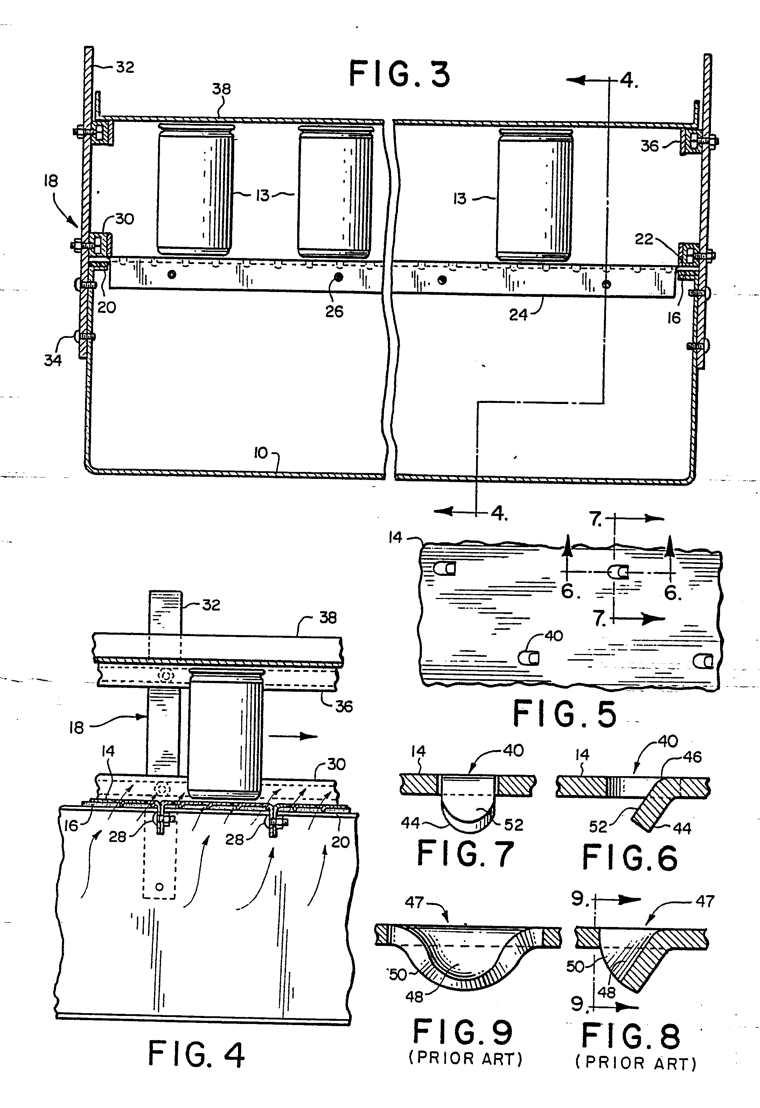

The flow plates 14 may be made of a variety of materials including metals, plastics and ceramics, and may be formed in any suitable manner such as molding, stamping, forging or casting. In the preferred embodiment, the flow plates are constructed of 18 gauge stainless steel that is stamped to form the preferred structure illustrated in FIGS. 2-4. As illustrated in FIGS. 2 and 4 the flow plate 14 has a cross section that defines an inverted channel. Extending from either end of the channel are integral mounting ears or tabs 22, the purpose of which will be explained later. Depending portions or tabs 24 reinforce flow plate 14 in a direction parallel to the tabs and prevent the undesirable bowing or ballooning effect that necessitates the center fastening of the prior art. The tabs 24 contain openings 26 that accept bolts 28 or other fastening means that enable a number of flow plates 14 to be fastened together. While the channel shape of the flow plate itself prevents the bowing of the conveyor surface 12, the flow plates are connected together as shown in FIG. 4 to increase the overall rigidity of the conveyor surface 12. The length of the depending tabs 24 depends on the width of the plenum 10. The width of the depending tabs 24 depends on the static pressure within the plenum. It has been determined that the following relationships are sarisfactory for 4 inch wide flow plates.

| LENGTH OF TAB (inches) | WIDTH OF TAB (inches) |
| --- | --- |
| 12 | 1 |
| 18 | 1 |
| 24 | 1 |
| 30 | 1.5 |
| 36 | 1.5 |
| 42 | 2 |
| 48 | 2 |

Extending from opposite ends of the flow plates are coplanar mounting tabs or ears 22 adapted to engage the seal pads 16 and flanges 20 of plenum 10 in combination with the compression rail assembly 18 to provide an airtight seal.

The compression rail assembly consists of a horizontal compression rail 30 secured to vertical members 32, which are spaced at intervals along the length of plenum 10. The vertical members 32 are releasably secured to the plenum by bolts 34, clamps (not shown) or other appropriate fastening means. The location of the fastening means and the resilience of the seal pad 16 must be such that sufficient compression of the pad between the horizontal member 30 and the flange 20 is achieved to obtain an airtight seal. The second horizontal rail 36 (optional) can also be conveniently attached to the vertical members of the compression rail as shown in FIG. 2. This rail supports conveyor cover 38 (optional) which is connected to the rail 36 in an appropriate manner.

Each flow plate 14 includes a number of open-sided louvers 40 formed in the surface thereof and illustrated in FIGS. 5-7. As used herein, an open-sided louver is one in which the tab 44 is attached to the plate 14 on only one side 46, in contrast with the prior art louvers which have enclosed sides, as shown in FIGS 8 and 9.

In the preferred embodiment, the louvers 40 are substantially rectangularly shaped tabs 44 which are punched from the flow plate material, however, any method of manufacture is acceptable. The tabs are pushed through the surface of the flow plate so that they form an angle of approximately 65 degrees therewith. The leading edge of the louver may be rounded (as shown at 42) to prevent snagging of cleaning implements. The number and size of the louvers depends on the material being transported and the static pressure of the air in the plenum. For aluminum cans 13, the preferred embodiment uses louvers spaced 1 inch from each other. Successive rows of louvers are offset by half that distance.

Whenever the flow plates require cleaning, persons responsible for the task simply release the compression rail assembly 18 and lift the conveyor cover 38 and compression rail 30 off as a single unit. The flow plates 14 can now be removed and either cleaned or replaced with precleaned flow plates. If the plates are to be cleaned, maintenance personnel need only turn the plates upside down and scrub the bottom of the plates with a brush.

In the prior art louvers 47, dirt accumulating at 48 can only be removed by inserting a cleaning implement into the louver. The closed sides 50 of the prior art louvers prevent access to the dirt from the bottom of the flow plate. In contrast, dirt accumulating in a similar position 52 in louver 40 can be removed by scrubbing the bottom of flow plate 14 with a brush. In addition, because the louvers are disposed in rows, several open-sided louvers 40 can be cleaned at once, thus reducing the cleaning time.

## Claims

1. An air conveyor comprising;

an air plenum;

a flow plate including a plurality of open-sided louvers defining openings in said plate; and

means for releasably connecting said flow plate to said plenum to form an airtight seal therebetween.

2. The air conveyor described in claim 1 wherein said plenum includes a mounting flange and said flow plate includes a mounting tab, said conveyor further comprising a resilient seal disposed between said flange and said tabs and said means for connecting includes means for compressing said seal between said flange and said tab to provide said airtight seal.

3. An air conveyor comprising;

an air plenum;

an inverted channel-shaped flow plate, said flow plate including a horizontal surface having integral coplanar tabs extending from the ends thereof and a plurality of open-sided louvers defining openings in said plate, said louvers extending into the volume defined by said channel; and

means for releasably engaging the tabs of said flow plate to sealingly connect said plate to said plenum so that air within said plenum escapes only through said louvers.

4. An air conveyor comprising;

an air plenum;

an inverted channel-shaped flow plate, said flow plate including a horizontal surface having integral coplanar tabs extending from the ends thereof and a plurality of louvers defining openings in said plate, said louvers extending into the volume defined by said channel; and

means for releasably engaging the tabs of said flow plate to sealingly connect said plate to said plenum so that air within said plenum escapes only through said louvers.

5. An air conveyor comprising:

an air plenum including a mounting flange;

a resilient seal adapted to engage said flange;

a plurality of flow plates, each of said plates containing means for connecting one of said plates to the next adjacent plates, means for engaging said seal, and a plurality of open-sided louvers; and

means for releasably engaging said plenum and said flow plates so that said seal is disposed between the flange of the plenum and the engaging means of said flow plates.

6. An air conveyor comprising,

an air plenum including a pair of mounting flanges;

a resilient seal adhesively secured to each of said flanges;

a plurality of inverted channel shaped flow plates, each of said plates having a horizontal surface and a pair of depending reinforcing tabs, said horizontal surface including a plurality of open-sided louvers and a pair of coplanar mounting tabs adapted to engage said seals;

means for connecting the reinforcing tabs of one flow plate to a reinforcing tab of the next adjacent plate;

a pair of compression rails adapted to engage the mounting tabs of said plurality of flow plates; and

releasable means for engaging said compression rails to form an airtight seal between said flow plates and said plenum flanges.

7. A flow plate for use in an air conveyor system having a horizontal surface including integral coplanar tabs extending from the ends thereof and a plurality of open-sided louvers extending beneath said surface and defining openings therein.

8. The flow plate defined in claim 6 further comprising a pair of depending reinforcing tabs extending from said horizontal surface.

9. An inverted channel-shaped flow plate for use in an air conveyor, said plate including a horizontal surface having integral coplanar tabs extending from the ends thereof and a plurality of substantially rectangular open-sided louvers defining openings in said surface, said louvers extending into the volume defined by said channel at an angle of approximately 65 degrees with respect to said surface.

10. The flow plate defined in claim 9 wherein the ends of said louvers are rounded.

# FIG. 1

# FIG. 2

# FIG. 3

# FIG. 5

# FIG. 4

# FIG. 7

# FIG. 6

# FIG. 9
(PRIOR ART)

# FIG. 8
(PRIOR ART)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 195 596 (FUTER) <br> * page 2, lines 64-68,88-107; figures 1-4 * | 1,2 | B 65 G 51/03 |
| A | | 3-7,9 | |
| Y | US-A-3 477 764 (SMITH) <br> * column 1, lines 51-71; figures 1,4,5 * | 1,2 | |
| A | | 3-6 | |
| A | US-A-2 315 627 (LAMB) <br> * figure 3 * | 1 | |
| A | US-A-4 578 001 (OCHS et al.) <br> * column 3, lines 18-36; figures 4,5 * | 1,10 | |
| A | DE-U-7 800 747 (POLYSIUS) <br> * page 8, lines 2-17; figures 1-4 * | 1,3,4,6 ,8 | |
| A | DE-U-7 142 868 (C. PETERS) <br> * page 3, lines 24-29; figure 1 * | 1,8 | TECHNICAL FIELDS SEARCHED (Int. Cl.4) |
| A | GB-A-1 402 127 (CATTIN MACHINES) <br> * page 1, lines 33-49; figures 1,2 * | 5 | B 65 G 7/00 <br> B 65 G 51/00 |
| A | US-A-1 440 316 (PEIRCE) <br> * page 1, lines 86-108; figures 1-4 * | 6,8 | B 65 G 53/00 |

The present search report has been drawn up for all claims

| Place of search | Date of completion of the search | Examiner |
|---|---|---|
| BERLIN | 01-07-1988 | SIMON J J P |